# EUROPEAN PATENT APPLICATION

(11) **EP 2 520 913 A1**
(43) Date of publication of application: **07.11.2012**
(21) Application number: 12164930.5
(22) Date of filing: 20.04.2012
(51) Int. Cl.: G01G 21/28

(54) **Weighing Device Draft Shield with Displaceable and Adjustable Wall**

(30) Priority: 06.05.2011 US 201113102745
(71) Applicant: Ohaus Corporation, Parsipanny, NJ 070543 (US)
(72) Inventor: Nuzzi, Michael, Jersey City, NJ 07306 (US); Olesen, Neil, Millington, NJ 07946 (US); Gardner, Douglas, Dumont, NJ 07628 (US); Mingli, Chang, 200333 Shanghai (CN)
(74) Representative: Mettler-Toledo

(57) **Abstract**

A draft shield for a weighing device has at least one linearly displaceable wall (e.g., side wall) for allowing access into a weighing compartment of the weighing device. Each displaceable wall is provided with a top guide rail that passes through a roller assembly. Each displaceable wall is suspended in a substantially vertical position by engagement of its guide rail with a corresponding roller assembly. An adjustment element may be provided to alter the position of certain rollers of the roller assembly such that the orientation of the corresponding guide rail and attached displaceable wall may be adjusted to account for dimensional variations of the enclosure, etc. The use of a guide rail and roller assembly facilitates displaceable wall movement by substantially eliminating sliding friction.

## Description

### BACKGROUND OF THE INVENTIVE FIELD

The present invention is directed to a draft shield for a weighing device, such as a balance, the draft shield having at least one wall that is coupled to a guide rail and suspended by a roller assembly that facilitates linear displacement of the wall.

Sensitive weighing devices, such as balances, typically have a high measurement resolution. Consequently, the weight readings produced by such weighing devices may be undesirably influenced by even small environmental factors that act on the object being weighed or on the load receiver of the device. Air movement is one such environmental factor. Because of this, such weighing devices commonly include a weighing compartment that is enclosed, or substantially enclosed, within what is commonly referred to as a draft shield.

A draft shield typically includes a rear wall, side walls, a front wall, and a top wall or cover. Frequently, a draft shield includes one or more walls, usually a side wall(s) and/or a top wall that are displaceable to allow access into the weighing compartment. The front wall and back wall of the draft shield may be rigidly connected to the housing of the weighing device to lend structural support to the draft shield, although there are exceptions to this design. For example, the front wall may be displaceable. In any event, it is desirable that a draft shield seal as tightly as possible to prevent the intrusion of air drafts into the weighing compartment, while still allowing for easy access to the weighing compartment when necessary.

In order to make the weighing compartment of such a weighing device more easily accessible, various draft shield designs having liftable, slidable or otherwise displaceable access walls/doors have been created. For example, a known draft shield design locates one or both side walls in an upper and/or lower track that allows the side wall to slide within a groove that is cut or formed in the track. Other known draft shields may include a liftable (e.g., hinged) or slidable top wall or cover.

While these known draft shield designs may function to allow deliberate access to the weighing compartment of a weighing device, they are not without their drawbacks. For example, draft shields offering access through only a top wall may make use of the weighing device more difficult, as access to the load receiving surface of the weighing device through only the top of the draft shield is typically more restricted and the load receiving surface is generally located at the base of the draft shield. Access through only the top of a draft shield may be further restricted when another component such as, for example, a dosage-dispensing device, is located above the weighing compartment.

While draft shields offering passage into a weighing compartment through a side wall may improve access to the load receiving surface of the weighing device, these designs are not without their own problems. For example, known designs of this type generally result in direct sliding friction between the sliding wall of the draft shield and a track or similar component that is used to guide wall movement. This friction may prevent or inhibit a smooth movement of the sliding wall, and may also result in wear of the wall and/or track surfaces that are in contact. Additionally, because the track is typically affixed to the draft shield frame and there is no means of adjusting the position of the sliding wall with respect to the track, these known draft shield designs cannot account for manufacturing variances that may result in improper wall fit or movement.

The present invention is therefore directed to a draft shield for a weighing device, which draft shield offers improved access wall movement and may also allow for positional adjustment of the access wall to ensure that it seals and moves properly.

### SUMMARY OF THE GENERAL INVENTIVE CONCEPT

The present invention is directed to a draft shield for enclosing the weighing compartment of a weighing device such as a balance. The draft shield comprises an enclosure forming an enclosed weighing compartment on said weighing device, said enclosure including at least one displaceable wall. A guide rail is affixed to said displaceable wall, along a top edge thereof; and a roller assembly is connected to said enclosure, said roller assembly including at least two rotatably mounted and spaced apart rollers, with at least one roller located to reside below but in contact with said guide rail and at least one roller located to reside above but in contact with said guide rail, when said displaceable wall is installed to said draft shield. Said displaceable wall is adapted for substantially vertical suspension by engagement of said guide rail with said rollers, and said rollers are provided to facilitate linear displacement of said displaceable wall by rolling in response to movement of said guide rail.

A draft shield of the present invention will generally form an enclosure having a front wall, rear wall, top wall, and two side walls. One or both of the side walls are linearly displaceable to allow for access into the weighing compartment.

Unlike known draft shields, a displaceable side wall of a draft shield of the present invention is suspended from a top edge thereof. A guide rail is attached to the displaceable side wall along its top edge for this purpose, as well as for guiding the side wall during linear movement thereof. A roller assembly is attached to an associated mounting surface of the enclosure, such as a top wall of the draft shield or to some other suitable element thereof. When the displaceable side wall is properly installed to the draft shield, the guide rail is engaged with the roller assembly.

One embodiment of a roller assembly includes three rollers, which are arranged in a substantially triangular relationship. In one version of this roller assembly, two of the rollers are aligned in a plane that is substantially parallel with the top of the draft shield, while the third roller is spaced apart from and located substantially at the center point between the other two rollers. The spacing between the upper roller pair and the lower roller is of a dimension that will allow passage of the guide rail attached to the displaceable side wall, with the rollers in contact with respective upper and lower surfaces of the guide rail. Thus, the displaceable side wall is suspended from the roller assembly. When the displaceable side wall is moved linearly forward or rearward by a user, the guide rail rolls on the rollers of the roller assembly, which results in greatly reduced friction in comparison to known draft shield designs in which sliding friction takes place.

The roller assembly may be adjustable to permit changes to the orientation of the displaceable side wall. The degree of adjustability may vary, but generally the roller assembly is sufficiently adjustable to account for displaceable side wall alignment problems stemming from dimensional (e.g., manufacturing) variances of the enclosure, etc.

In one exemplary embodiment, the upper pair of rollers of the previously described roller assembly are rotatably mounted to respective support arms that extend upward from an upper roller mounting surface, such as a portion of a roller assembly mounting bracket. A free end of each support arm is coupled to the support arm mounting surface via an adjustment element (e.g., a screw). Rotation of the adjustment screw in one direction causes the free end of the support arm and the attached roller to move toward the support arm mounting surface, while rotation of the adjustment screw in the opposite direction has the reverse effect. Consequently, the spacing between the upper and lower rollers of the roller assembly may be adjusted, as well as the angle at which the guide rail passes through the rollers and the orientation of the attached side wall.

### BRIEF DESCRIPTION OF THE DRAWINGS

In addition to the features mentioned above, other aspects of the present invention will be readily apparent from the following descriptions of the drawings and exemplary embodiments, wherein like reference numerals across the several views refer to identical or equivalent features, and wherein:
FIG. 1 is an exploded rear perspective view of an exemplary embodiment of a draft shield of the present invention;
FIGS. 2A and 2B are left-rear and right-front perspective views, respectively, of the assembled draft shield of FIG. 1 attached to a weighing device;
FIG. 3A is a partially cutaway perspective view of a displaceable side wall and roller assembly of the draft shield of FIGS. 1-2;
FIG. 3B is a front view of the roller assembly (side view of the draft shield) of FIG. 3A, which is shown in partial transparency and wherein the displaceable side wall has been removed from its guide rail for clarity; and
FIG. 4 is an isometric view of an alternative exemplary embodiment of a roller assembly.

### DETAILED DESCRIPTION OF EXEMPLARY EMBODIMENT(S)

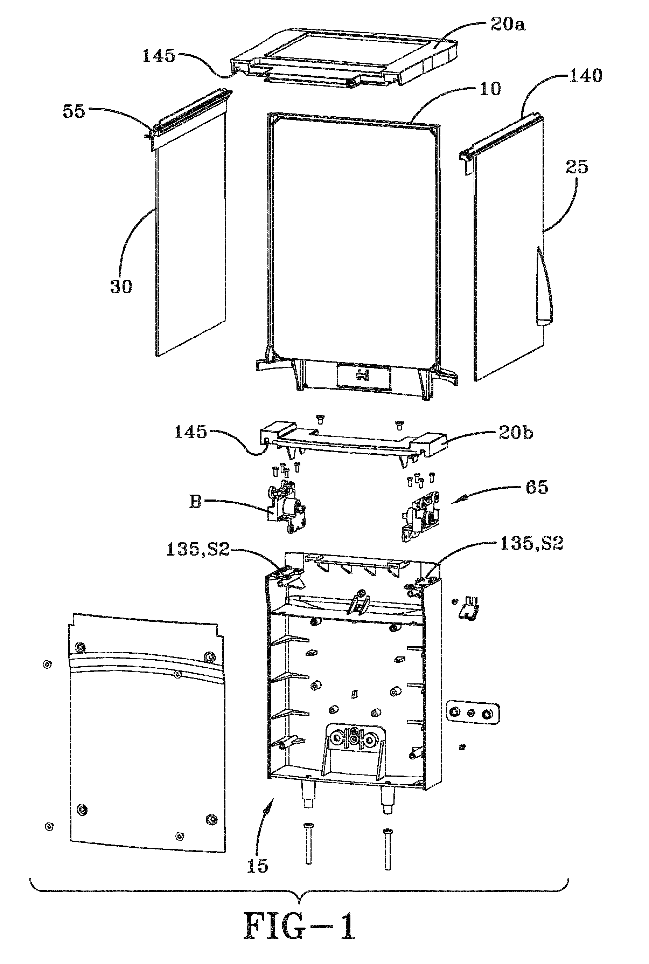

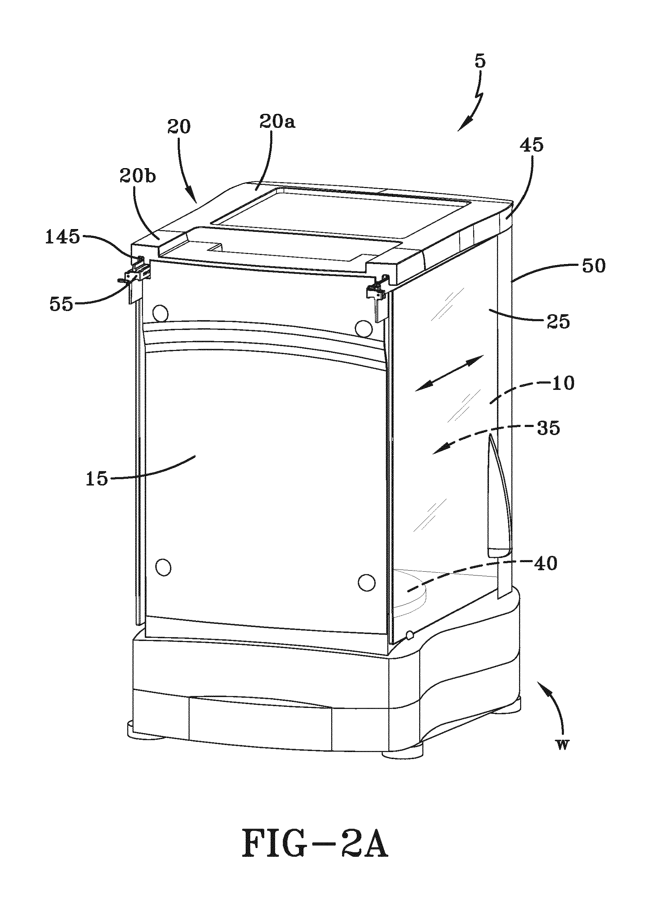

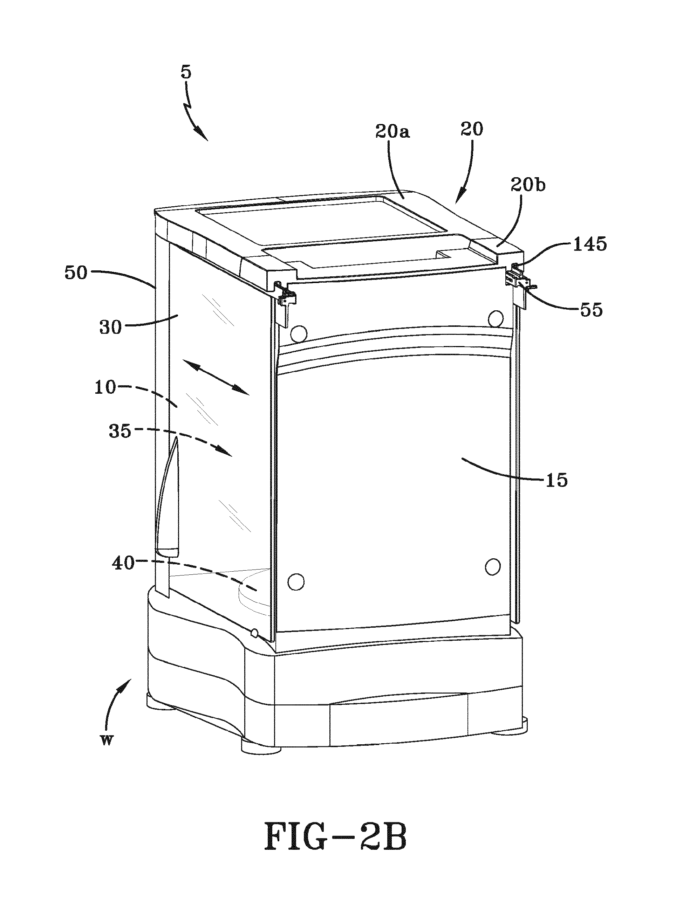

FIG. 1 shows one exemplary embodiment of a draft shield **5** of the present invention in an exploded condition for purposes of illustration. FIGS. 2A and 2B depict the draft shield **5** after assembly and installation to a weighing device **W.** In this case, the weighing device **W** is a balance, however, a draft shield of the present invention is not limited to use with any particular type of weighing device.

As can be observed, the draft shield **5** includes a front wall **10,** a rear wall **15,** a top wall (or cover) **20,** and a pair of opposed side walls **25, 30.** In this embodiment, the top wall **20** includes a forward portion **20a** that may be hinged or otherwise adapted to allow opening thereof, and a rearward portion **20b** that also functions as a cover for roller assemblies **65** of the device. Together, these walls **10-30** comprise an enclosure that forms a protected weighing compartment **35** around the load receiving surface **40** of the weighing device **W.** The draft shield **5** may also include a number of horizontal and vertical frame members that support and retain the walls **10-30,** as would be understood by one of skill in the art. In certain embodiments, these frame members may be independent elements. In this exemplary embodiment, integral portions **45, 50** of the front wall **10,** rear wall **15** and top wall **20** fulfill this supporting function.

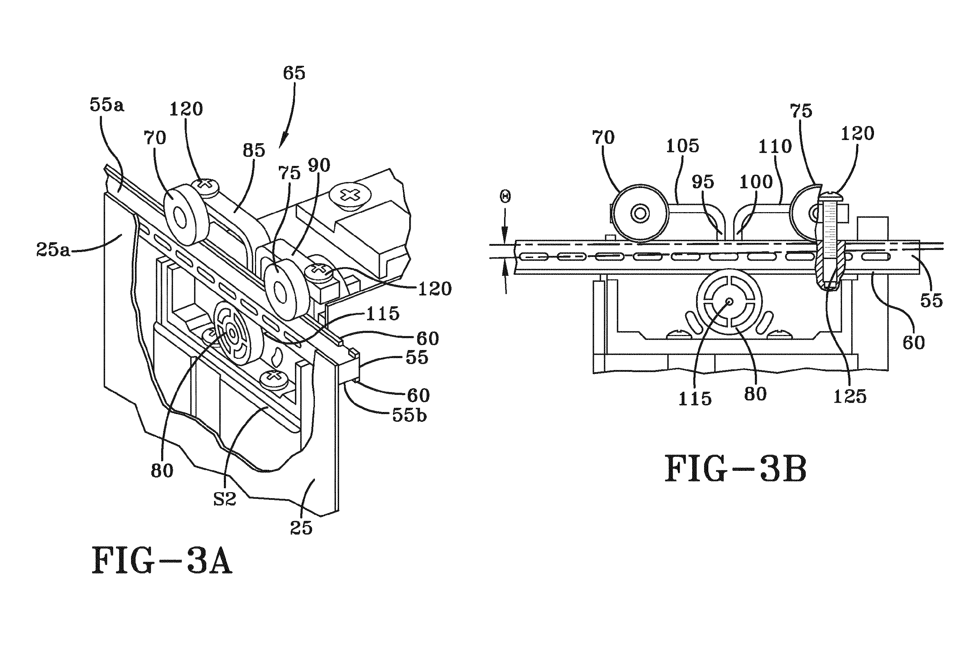

As described above, at least one of the side walls of a draft shield of the present invention is linearly displaceable to provide access to the weighing compartment **35.** In this particular embodiment of the draft shield **5,** both of the side walls **25, 30** are displaceable. To this end, the side walls **25, 30** of the draft shield **5** each include a guide rail **55** and are suspended from a roller assembly **65,** which may be best observed in FIGS. 3A-3B.

As best shown in FIG. 3A, a guide rail **55** is affixed to the displaceable side wall **25,** along a top edge **25a** thereof. The guide rail **55** may be permanently or releasably affixed to the side wall **25** by any means known in the art. Preferably, however, the selected means of affixation results in a seal between the guide rail **55** and the side wall **25.** When the assembly of the side wall **25** and guide rail **55** is properly positioned for mounting to the draft shield **5,** the side wall hangs substantially vertically downward and the guide rail is substantially horizontally oriented (with respect to the ground or the load receiving surface of the weighing device).

The guide rail **55** may be of various design and construction. For example, a guide rail of the present invention may be of substantially square or rectangular cross-section as shown, but may be of other cross-sectional shapes as well. A guide rail of the present invention may be constructed from plastic, metal or other materials of sufficient strength. A guide rail of the present invention may also be provided with a retention element such as the flange **60** shown on the guide rail **55.** Such a flange **60** helps to direct the side wall-guide rail assembly during movement and prevents the guide rail **55** from sliding transversely away from the rollers of a roller assembly through which the guide rail passes, as is described in more detail below.

In this exemplary embodiment, the guide rail **55** is also equipped with an upwardly-extending rib **140** that runs in the lengthwise direction of the guide rail along a top surface thereof. When the guide rail **55** is installed to the roller assembly **65,** the rib **140** is engaged with a corresponding elongate receiving slot **145** located in an underside of the top wall sections **20a, 20b.** When present, the rib **140** and receiving slot **145** arrangement may help to substantially seal the side wall **25** with the top wall **20.**

As depicted in FIGS. 3A-3B, linear displacement of a side wall **25** of the draft shield **5** is facilitated by passing the guide rail **55** of the side wall-guide rail assembly through a gap between the rollers **70-80** of a roller assembly **65.** This roller assembly **65** includes a bracket **B** that carries three rollers **70, 75, 80** arranged in a substantially triangular relationship to provide three points of contact with the guide rail **55.** In the exemplary embodiment shown and described herein, two of the rollers **70, 75** are positioned to reside above and contact an upper surface **55a** of the guide rail **55** as the guide rail passes through the roller assembly **65.** The third roller **80** is positioned to reside below and contact a lower surface **55b** of the guide rail **55** as the guide rail passes through the roller assembly **65.** In other embodiments, the location of the upper rollers and lower roller may be reversed, such that two rollers reside below the guide rail and one roller resides above the guide rail. In another embodiment, more than three rollers may be present. In yet another embodiment, fewer than three rollers may be present if side wall adjustability is not desired. For example, a single roller may reside below the guide rail and a single roller may reside above the guide rail.

In this exemplary embodiment, the third roller **80** is also preferably located on or near a vertically oriented centerline drawn between the upper rollers **70, 75,** so that the three rollers form the substantially triangular arrangement described above. As should be apparent, the spacing between the upper roller pair **70, 75** and the lower roller **80** is preferably of a dimension that will allow passage of the guide rail 55 attached to the displaceable side wall **25,** while simultaneously permitting contact between the rollers and the respective upper and lower surfaces **55a, 55b** of the guide rail.

The rollers of a roller assembly of the present invention are preferably rotatably mounted to individual roller support arms, although it may also be possible for the upper rollers to share a support arm. In the particular exemplary embodiment described herein, the upper rollers **70, 75** of the roller assembly **65** are rotatably mounted to respective upper roller support arms **85, 90** that extend upward from an upper support arm mounting surface **S1,** which may be, for example, a surface of the roller assembly bracket **B** (as shown), a draft shield frame element **45** or a draft shield wall.

The support arms **85, 90** of FIGS. 3A-3B may be described herein as having a fixed end (not visible) that is attached to or is an integral portion of the upper support arm mounting surface **S1** (e.g., bracket **B),** and a free opposite end that resides at some distance above the upper support arm mounting surface. In this particular embodiment, the support arms **85, 90** are substantially L-shaped, with one fixed leg **95, 100** extending vertically upward from the upper support arm mounting surface **S1** and the other free leg **105, 110** extending substantially perpendicularly from the fixed leg. The support arms **85, 90** are arranged such that the free legs **105, 110** extend in opposite directions. Preferably, but not essentially, the free legs **105, 110** of the support arms **85, 90** are somewhat resilient to accommodate slight variations in the size of the guide rail **55** as it passes through the roller assembly **65.** The upper rollers **70, 75** are rotatably mounted to the free legs **105, 110** of the support arms **85, 90,** such that the upper rollers are spaced apart along a direction of travel of the side wall **25.**

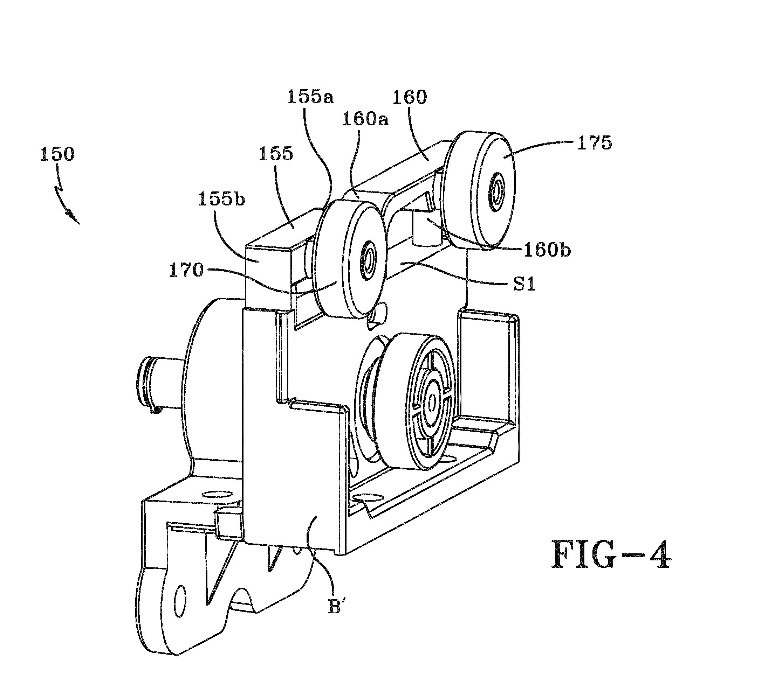

An alternative embodiment of a roller assembly **150** is illustrated in FIG. 4. In this embodiment, the support arms **155, 160** each include a fixed end **155a, 160a** that is attached to the upper support arm mounting surface **S1** of a roller assembly mounting bracket **B',** as well as a fixed opposite end **155b, 160b** that is also attached to the upper support arm mounting surface **S1.** In this particular embodiment, each leg **155a, 160a, 155b, 160b** extends vertically upward from the upper support arm mounting surface **S1,** with corresponding vertical legs connected by a substantially horizontal leg to which is mounted the upper rollers **170, 175.** The support arms 155, **160** are arranged much like the support arms **85, 90** of FIGS. 3A-3B. The upper rollers **170, 175** of this embodiment are rotatably mounted to the support arms 155, **160,** such that the upper rollers are spaced apart along a direction of travel of the side wall **25** (as shown in FIG. 3A).

The lower roller **80** of the roller assembly **65, 150** is rotatably mounted to a lower roller shaft **115** that is supported in the roller assembly bracket **B.** In this embodiment, the roller assembly bracket **B** is attached to a roller assembly mounting surface **S2** that is formed along an abbreviated upper mounting surface **135** of the draft shield rear wall **15** (see FIG. 1). In other embodiments it may be possible to mount the rollers of a roller assembly directly to a draft shield frame element **45** or a specially formed surface of a draft shield rear wall, top wall, etc.

As shown in FIGS. 3A-3B, when the side wall-guide rail assembly is installed to the draft shield **5,** the guide rail passes between the upper rollers **70, 75** and the lower roller **80,** which are separated by a distance that results in contact between the rollers and the respective surfaces **55a, 55b** of the guide rail **55.** Consequently, when the displaceable side wall **25** is moved linearly (moved forward or rearward) by a user, the guide rail **55** rolls on and is supported by the rollers **70-80** of the roller assembly **65,** thereby minimizing friction and facilitating side wall movement. Movement of the side wall **25** and guide rail **55** occurs in substantially the same manner when using the roller assembly **150** of FIG. 4.

While the upper roller support arms **85, 90** of the first exemplary roller assembly **65** have been described above as having a free leg **95, 100,** one or both of the free legs may actually be adjustably coupled to the upper support arm mounting surface **S1** to allow for positional adjustment of the side wall **25.** More specifically, in this particular draft shield embodiment, the free leg **95, 100** of each upper support arm **85, 90** is coupled to the upper support arm mounting surface **S1** via an adjustment element **120,** which is fully shown in the partially transparent view of FIG. 3B. In this particular embodiment, the adjustment element **120** is a threaded fastener that passes through an opening in each free leg **95, 100** of the upper support arms **85, 90** and into a correspondingly-threaded bore **125** in the upper support arm mounting surface **S1.**

Rotation of the adjustment element **120** in one direction causes the free leg **95, 100** of the upper support arm **85, 90** and the attached roller **70, 75** to move toward the upper support arm mounting surface **S1** (and the lower roller **80),** while rotation of the adjustment element in the opposite direction has the reverse effect. Movement of the free leg **95, 100** of the upper support arm **85, 90** away from the upper support arm mounting surface **S1** may be produced by use of a resilient upper support arm material. Alternatively, movement of the free leg **95, 100** of the upper support arm **85, 90** away from the upper support arm mounting surface **S1** may be produced by actual engagement of the adjustment element **120** with the upper support arm. For example, when the adjustment element **120** is a threaded fastener, the fastener may be placed in threaded engagement with the upper support arm **85, 90** rather than freely passing therethrough.

The inclusion of an adjustment element(s) allows the distance between the axial centerline of an associated upper roller to be adjusted relative to the axial centerline of the lower roller. For example, the spacing between the upper rollers **70, 75** and lower roller **80** of the roller assembly **65** of the exemplary draft shield **5** described herein may be adjusted using the adjustment elements **120,** as may the angle of the side wall-guide rail assembly. Referring to FIG. 3B, it can be understood that the spacing between the upper rollers **70, 75** and lower roller **80** may be uniformly adjusted by a like manipulation of each adjustment element **120.** However, the angle at which the side wall fits to the draft shield **5** and the angle at which the guide rail **55** moves through the roller assembly **65** may be changed by positioning one off the upper rollers **70, 75** closer to the upper support arm mounting surface **S1** than the other. In this embodiment, manipulation of the adjustment elements **120** may provide a change in the angle of the side wall **25** and the guide rail **55** of up to 0 degrees in either direction (although only one direction is represented).

With the guide rail **55** residing between the rollers **70-80,** it should be realized that the displaceable side wall **25** is suspended substantially vertically from the roller assembly **65, 150.** As such, the side wall **25** is able to contact the side edges of the front wall **10** and rear wall **15** of the draft shield **5,** or to produce a minimized gap with respect thereto.

While movement of a displaceable side wall of the draft shield **5** has been described above with respect to the left side wall **25,** it should be realized that the right side wall **30** may be equipped with a like roller assembly such that both side walls may be opened to access the weighing compartment **35.** The side walls **25, 30** may be equipped with handles **130** or similar elements to assist with movement thereof.

The exemplary draft shield shown and described herein includes displaceable side walls **25, 30** designed for manual movement by a user of the weighing device. However, as should be understood by one of skill in the art, a draft shield of the present invention may also be equipped with a variety of known actuator systems that are operable to move the displaceable side wall(s). Such actuator systems may include, without limitation, linear actuators, motor and belt systems, motor and gear systems, etc. In one such exemplary embodiment, the lower roller of the roller assembly may be driven to cause a linear movement of an associated side wall. In this case, the lower roller may be manufactured from, for example, plastic or a higher friction-producing material, or the roller may be coated with a friction-producing material to provide better grip with the guide rail.

Embodiments of the invention may be provided with a number of other features. For example, a guide element and/or a seal may be provided along the bottom of the moveable side wall(s) to assist with guided movement thereof and/or with the prevention of unwanted air infiltration into the weighing compartment. A seal may also be provided along the forward edge of the moveable side wall(s) or along the mating edge of the front wall to assist with sealing of the weighing compartment.

While certain embodiments of the present invention are described in detail above, the scope of the invention is not to be considered limited by such disclosure, and modifications are possible without departing from the spirit of the invention as evidenced by the following claims:

## Claims

1. A draft shield (5) for a weighing device (W), comprising:
an enclosure forming an enclosed weighing compartment (35) on said weighing device (W), said enclosure including at least one displaceable wall;
a guide rail (55) affixed to said displaceable wall, along a top edge thereof; and
a roller assembly (65) connected to said enclosure, said roller assembly (65) including at least two rotatably mounted and spaced apart rollers (70, 75, 80, 170, 175), with at least one roller located to reside below but in contact with said guide rail (55) and at least one roller located to reside above but in contact with said guide rail (55) when said displaceable wall is installed to said draft shield (5);
wherein said displaceable wall is adapted for substantially vertical suspension by engagement of said guide rail (55) with said rollers (70, 75, 80, 170, 175), and said rollers are provided to facilitate linear displacement of said displaceable wall by rolling in response to movement of said guide rail (55).

2. The draft shield of claim 1, wherein said enclosure includes a front wall (10), a rear wall (15), a top wall (20), and a pair of opposed side walls (25, 30).

3. The draft shield of claim 2, wherein at least one of the side walls (25, 30) is a displaceable wall.

4. The draft shield (5) of any of claims 1 to 3, wherein the rollers (70, 75, 80, 170, 175) of said roller assembly (65) are rotatably secured to a mounting bracket (B) that is adapted for attachment to said enclosure.

5. The draft shield of claim 4, wherein a rear wall (10) of said enclosure includes a mounting surface (135) for attachment of said mounting bracket (B).

6. The draft shield of any of claims 1 to 5, wherein said roller assembly (65) includes three rollers (70, 75, 80, 170, 175), with one roller (80) located to reside below but in contact with said guide rail (55) and two rollers (70, 75, 170, 175) located to reside above but in contact with said guide rail (55) when said displaceable wall is installed to said draft shield (5), so as to provide three points of contact with said guide rail (55).

7. The draft shield of claim 6, wherein the rollers (70, 75) of said roller assembly located to reside above but in contact with said guide rail (55) are rotatably secured to independent roller support arms (85, 90).

8. The draft shield of claim 7, wherein the independent roller support arms (85, 90) are substantially L-shaped with one fixed leg (95, 100) extending vertically upward from the upper support arm mounting surface (S1) and a free leg (105, 110) extending substantially perpendicularly from the fixed leg (95, 100), wherein in particular the support arms (85, 90) are arranged such that the free legs (105, 110) extend in opposite directions.

9. The draft shield of claim 7 or 8, wherein the roller support arms (85, 90) are adjustably coupled to a support arm mounting surface (S1) by an adjustment element (120) to allow for positional adjustment of the displaceable wall.

10. The draft shield of any of claims 7 to 9, wherein the roller support arms (85, 90) are adjustably coupled to a support arm mounting surface (S1) by a threaded fastener.

11. The draft shield of claim 6, wherein the rollers (70, 75) of said roller assembly located to reside above but in contact with said guide rail (55) are rotatably secured to support arms (155, 160) each including a fixed end (155a, 160a) that is attached to an upper support arm mounting surface (S1) of a roller assembly mounting bracket (B'), as well as a fixed opposite end (155b, 160) that is also attached to the upper support arm mounting surface (S1).

12. The draft shield of any of claims 1 to 11, wherein a top wall (20) of said enclosure includes a rearward portion (20a) that is adapted to cover said roller assembly (65) when said roller assembly (65) is connected to said enclosure.

13. The draft shield of any of claims 1 to 12, wherein said guide rail (55) includes an upwardly-extending rib (140) along a top surface thereof and a top wall (20) of said enclosure includes a corresponding receiving slot (145) in an underside thereof.

14. The draft shield of any of claims 1 to 13, wherein said guide rail (55) is provided with a retention element, preferably a flange (60).

15. A weighing device (W) comprising a draft shield (5) according to any of the claims 1 to 14.
